# EUROPÄISCHE PATENTSCHRIFT

(11) **EP 4 472 856 B1**
(45) Veröffentlichungstag und Bekanntmachung des Hinweises auf die Patenterteilung: **12.11.2025**
(21) Anmeldenummer: 23702759.4
(22) Anmeldetag: 26.01.2023
(51) Int. Cl.: B60K 37/00, G06F 3/041

(54) **SYSTEM UND VERFAHREN ZUR ABSICHERUNG EINES FAHRASSISTENZSYSTEMS**
SYSTEM AND METHOD FOR PROTECTING A DRIVING ASSISTANCE SYSTEM
SYSTÈME ET PROCÉDÉ DE SÉCURISATION D'UN SYSTÈME D'AIDE À LA CONDUITE

(30) Priorität: 02.02.2022 DE 102022102374
(43) Veröffentlichungstag der Anmeldung: 11.12.2024
(73) Patentinhaber: Bayerische Motoren Werke Aktiengesellschaft, 80809 München (DE)
(72) Erfinder: HELLER, Martin, 86836 Graben (DE)
(86) Internationale Anmeldenummer: PCT/EP2023/051847
(87) Internationale Veröffentlichungsnummer: WO 2023/148068

(56) Entgegenhaltungen:
- US-A1- 2008 211 779
- US-A1- 2018 232 195

## Beschreibung

Die vorliegende Offenbarung betrifft ein System zur Absicherung eines Fahrassistenzsystems, ein Verfahren zur Absicherung eines Fahrassistenzsystems und ein Speichermedium zum Ausführen des Verfahrens. Die vorliegende Offenbarung betrifft insbesondere eine Homologation einer Einparkhilfe.

### Stand der Technik

Die Entwicklung von Fahrassistenzfunktionen gewinnt stetig an Bedeutung. Um eine möglichst präzise Umgebungswahrnehmung für Fahrerassistenzsysteme zu ermöglichen können Sensormessungen von diversen Sensortypen, wie z.B. Kameras, LiDAR und Radaren verwendet werden. Für ein zuverlässiges Funktionieren von Fahrassistenzfunktionen muss dabei eine präzise Umgebungswahrnehmung sichergestellt werden.

Eine große Herausforderung bei der Entwicklung von Fahrassistenzfunktionen besteht darin, dass die Fahrassistenzfunktionen eine strenge Verifizierung und Validierung durchlaufen müssen, um Sicherheitsvorschriften einzuhalten und Vertrauen bei Nutzern zu erlangen. Beispielsweise ist es bei einer Einparkhilfe erforderlich, dass eine Zeitspanne zwischen einer Aktivierung der Einparkhilfe durch einen Nutzer und der Ausgabe akustischer Signale durch die Einparkhilfe einen festgelegten Schwellwert nicht überschreiten darf. Für eine Bestimmung der Zeitspanne zwischen der Aktivierung der Einparkhilfe und der Ausgabe der akustischen Signale können Bussignale der Fahrzeugelektronik verwendet werden. Dies ist jedoch mit erheblichem Aufwand verbunden. Zudem kann es problematisch sein, Dritten Zugang zur Fahrzeugelektronik zu gewähren.

US 2018/232195 A1 beschreibt eine Sensoranordnung, die eingerichtet ist, um eine Betätigung eines Bedienelements eines Fahrzeugs durch einen Nutzer zu erfassen und entsprechende Erfassungsdaten zu erzeugen.

### Offenbarung der Erfindung

Es ist eine Aufgabe der vorliegenden Offenbarung, ein System zur Absicherung eines Fahrassistenzsystems, ein Verfahren zur Absicherung eines Fahrassistenzsystems und ein Speichermedium zum Ausführen des Verfahrens anzugeben, die eine vereinfachte Verifizierung eines Fahrassistenzsystems, insbesondere einer Einparkhilfe, ermöglichen.

Diese Aufgabe wird durch den Gegenstand der unabhängigen Ansprüche gelöst. Vorteilhafte Ausgestaltungen sind in den Unteransprüchen angegeben.

Gemäß einem unabhängigen Aspekt der vorliegenden Offenbarung ist ein System zur Absicherung eines Fahrassistenzsystems angegeben. Das System umfasst eine Sensoranordnung und wenigstens ein Auswertemodul. Die Sensoranordnung ist eingerichtet, um eine Betätigung eines Bedienelements eines Fahrzeugs durch einen Nutzer zu erfassen und entsprechende erste Erfassungsdaten zu erzeugen; und ein akustisches Signal, das die Betätigung des Bedienelements durch den Nutzer anzeigt oder basierend auf der Betätigung des Bedienelements ausgegeben wird, zu erfassen und entsprechende zweite Erfassungsdaten zu erzeugen. Das wenigstens eine Auswertemodul ist eingerichtet, um basierend auf den ersten Erfassungsdaten einen ersten Zeitpunkt, der der Betätigung des Bedienelements durch den Nutzer entspricht, zu bestimmen; und basierend auf den zweiten Erfassungsdaten einen zweiten Zeitpunkt, der einer Ausgabe des akustischen Signals entspricht, zu bestimmen.

Erfindungsgemäß erfasst die Sensoranordnung, die im Fahrzeug installierbar ist, zwei Ereignisse: Zum einen das Betätigen des Bedienelements (z.B. ein haptischer und/oder akustischer Trigger am Gangwahlschalter oder einem Aktivierungselement für das Fahrassistenzsystem) und zum anderen ein dadurch ausgelöstes akustisches Signal (z.B. eine Tonausgabe eines Lautsprechers), wobei für jedes der Ereignisse ein Zeitstempel bestimmt wird. Mittels der entsprechenden Zeitstempel kann bestimmt werden, ob z.B. gesetzlich festgelegte Maximalzeiten zwischen Betätigen des Bedienelements und dem akustischen Signal eingehalten werden. Dadurch sind Rückschlüsse auf eine Performance des Fahrassistenzsystems, wie einer Einparkhilfe, beispielsweise für eine Homologation desselben möglich. Zudem ist es nicht notwendig, für die Homologation eine diskrete Verkabelung bzw. Bussignale abzugreifen und/oder geschützte Informationen, wie z.B. Schaltpläne und/oder Bordnetztopologien, zu verwenden.

Vorzugsweise ist das wenigstens eine Auswertemodul eingerichtet, um eine Differenz zwischen dem zweiten Zeitpunkt und dem ersten Zeitpunkt zu bestimmen. Die Differenz gibt eine Zeitspanne zwischen der Betätigung des Bedienelements und der dadurch initiierten Ausgabe des akustischen Signals an. Beispielsweise kann gesetzlich festgelegt sein, dass die Zeitspanne zwischen der Betätigung des Bedienelements und der dadurch initiierten Ausgabe des akustischen Signals gleich oder kleiner als ein Schwellwert sein muss. Mittels des erfindungsgemäßen Systems kann revisionssicher eine entsprechende Überprüfung erfolgen.

Vorzugsweise ist der Schwellwert 1 Sekunde oder weniger, 800 Millisekunden oder weniger, oder 600 Millisekunden oder weniger. In einigen Ausführungsformen kann der Schwellwert 600 Millisekunden sein.

Vorzugsweise ist das wenigstens eine Auswertemodul eingerichtet, um die Differenz zwischen dem zweiten Zeitpunkt und dem ersten Zeitpunkt zu bestimmen und mit dem Schwellwert zu vergleichen. Ein Vergleichsergebnis kann zum Beispiel auf einer Anzeige des Systems ausgegeben und/oder an eine externe Einheit, wie einen Server oder ein Backend, übermittelt werden.

Vorzugsweise erfolgt eine Auswertung der Erfassungsdaten nur dann, wenn das akustische Signal erfasst wird, insbesondere wenn das akustische Signal mit einer bestimmten Sicherheit erfasst wird (z.B. da die zweiten Erfassungsdaten bzw. ein entsprechendes (Spannungs-)Signal eine Mindestamplitude überschreitet). Anders gesagt kann das akustische Signal als Trigger verwendet werden, der die Auswertung der ersten Erfassungsdaten und der zweiten Erfassungsdaten initiiert.

Vorzugsweise umfasst, oder ist, das wenigstens eine Auswertemodul wenigstens ein Prozessormodul. Ein Prozessor bzw. ein Prozessormodul ist ein programmierbares Rechenwerk, also eine Maschine oder eine elektronische Schaltung, die gemäß übergebenen Befehlen andere Elemente steuert und dabei einen Algorithmus (Prozess) vorantreibt.

Vorzugsweise umfasst, oder ist, das wenigstens eine Auswertemodul ein Oszilloskop.

Vorzugsweise umfasst die Sensoranordnung wenigstens ein erstes Sensormodul, das eingerichtet ist, um die Betätigung des Bedienelements durch den Nutzer zu erfassen und die ersten Erfassungsdaten zu erzeugen. Das wenigstens eine erste Sensormodul kann einen oder mehrere elektronische Berührungssensoren umfassen, die bei einer Berührung durch den Nutzer ein entsprechendes Signal ausgeben. Die vorliegende Offenbarung ist jedoch nicht hierauf begrenzt und das wenigstens eine erste Sensormodul kann eines oder mehrere Mikrofone umfassen, die eingerichtet sind, um die Betätigung des Bedienelements durch den Nutzer akustisch zu erfassen (z.B. durch ein charakteristisches Geräusch beim Betätigen eines Gangwahlschalters).

In einigen Ausführungsformen kann die Sensoranordnung, insbesondere das wenigstens eine erste Sensormodul, eingerichtet sein, um die Betätigung des Bedienelements durch den Nutzer zu erfassen und die ersten Erfassungsdaten zu erzeugen, wenn die Berührung eine Schwelle, wie zum Beispiel eine Kraft- und/oder Druckschwelle, überschreitet. Damit kann verhindert werden, dass eine Betätigung des Bedienelements fälschlicherweise zum Beispiel aufgrund einer leichten Berührung des Nutzers ohne entsprechende Aktivierung des Fahrassistenzsystems erfasst wird.

Vorzugsweise umfasst die Sensoranordnung wenigstens ein zweites Sensormodul, das eingerichtet ist, um das akustisches Signal, das die Betätigung des Bedienelements durch den Nutzer anzeigt, zu erfassen und die zweiten Erfassungsdaten zu erzeugen. Das wenigstens eine zweite Sensormodul kann eines oder mehrere Mikrofone umfassen, die ein charakteristisches akustisches Signal erfassen können, das bei und/oder nach einer Aktivierung des Fahrassistenzsystems ausgegeben wird.

Vorzugsweise sind das wenigstens eine erste Sensormodul und das wenigstens eine zweite Sensormodul von einem verschiedenen Funktionstyp. Beispielsweise kann das wenigstens eine erste Sensormodul einen oder mehrere elektronische Berührungssensoren umfassen, und das wenigstens eine zweite Sensormodul kann eines oder mehrere Mikrofone, insbesondere Richtmikrofone, umfassen.

Vorzugsweise ist das wenigstens eine erste Sensormodul am Bedienelement des Fahrzeugs befestigbar, insbesondere lösbar befestigbar. Beispielsweise kann das wenigstens eine erste Sensormodul mittels eines oder mehrerer erster Montageelemente lösbar am Bedienelement befestigt werden. Das eine oder die mehreren ersten Montageelemente können aus der Gruppe ausgewählt sein, die ein Klebeelement (z.B. eine Klebeschicht oder ein Klebeband), eine Schraube, ein Spannelement und Kombinationen davon umfasst, oder die daraus besteht.

Ergänzend oder alternativ kann das wenigstens eine zweite Sensormodul an einer Struktur des Fahrzeugs befestigbar, insbesondere lösbar befestigbar, sein. Beispielsweise kann das wenigstens eine zweite Sensormodul mittels eines oder mehrerer zweiter Montageelemente lösbar an der Struktur des Fahrzeugs befestigt werden. Das eine oder die mehreren zweiten Montageelemente können aus der Gruppe ausgewählt sein, die ein Klebeelement (z.B. eine Klebeschicht oder ein Klebeband), eine Schraube, ein Spannelement und Kombinationen davon umfasst, oder die daraus besteht.

In einigen Ausführungsformen kann das wenigstens eine zweite Sensormodul an einer Struktur des Fahrzeugs befestigbar, insbesondere lösbar befestigbar, sein, so dass das wenigstens eine zweite Sensormodul an oder nahe an einem Lautsprecher des Fahrzeugs angeordnet ist, der das zu erfassende akustische Signal ausgibt.

Vorzugsweise umfasst die Sensoranordnung ein Sensormodul, das eingerichtet ist, um sowohl die Betätigung des Bedienelements durch den Nutzer als auch das akustisches Signal zu erfassen und die ersten Erfassungsdaten und die zweiten Erfassungsdaten zu erzeugen. Beispielsweise kann ein einziges Sensormodul vorgesehen sein, um beide Ereignisse zu erfassen. In einigen Ausführungsformen kann das Sensormodul ein Mikrofon umfassen oder ein Mikrofon sein.

Vorzugsweise umfasst das System einen Sound-Generator, der am Bedienelement des Fahrzeugs befestigbar ist, wobei der Sound-Generator eingerichtet ist, um bei der Betätigung des Bedienelements durch den Nutzer Schall zu erzeugen, der durch das Sensormodul erfassbar ist, um die ersten Erfassungsdaten zu erzeugen. Beispielsweise kann der Sound-Generator mittels eines oder mehrerer Montageelemente lösbar am Bedienelement des Fahrzeugs befestigt werden. Das eine oder die mehreren Montageelemente können aus der Gruppe ausgewählt sein, die ein Klebeelement (z.B. eine Klebeschicht oder ein Klebeband), eine Schraube, ein Spannelement und Kombinationen davon umfasst, oder die daraus besteht.

Vorzugsweise ist der Sound-Generator ein mechanischer Sound-Generator, wie zum Beispiel ein mechanischer Klick-Sound-Generator.

Vorzugsweise ist das Bedienelement des Fahrzeugs ein Gangwahlschalter oder ein Schaltelement (z.B. ein mechanischer Taster) zum Aktivieren des Fahrassistenzsystems bzw. einer entsprechenden Fahrassistenzfunktion, wie einer Einparkhilfe.

Vorzugsweise ist das System nicht-permanent im Fahrzeug installierbar. Anders gesagt ist das System nicht fest im Fahrzeug integriert und kann lediglich zeitweise bzw. zeitlich begrenzt zum Zwecke der Absicherung bzw. Homologation des Fahrassistenzsystems im Fahrzeug installiert werden.

Vorzugsweise ist das Fahrassistenzsystem eine Einparkhilfe (Park Distance Control, PDC). Die Einparkhilfe kann zum Beispiel durch ein Einlegen eines Rückwärtsgangs oder das Betätigen eines Schalters aktiviert werden. Beim Aktivieren der Einparkhilfe kann das akustische Signal ausgegeben werden, das dem Fahrer die erfolgreiche Aktivierung der Einparkhilfe anzeigt. Alternativ kann das akustische Signal ein Warnton sein, der einen Abstand zu einem Hindernis, wie einem anderen Fahrzeug, anzeigt.

Gemäß einem weiteren unabhängigen Aspekt der vorliegenden Offenbarung ist ein Fahrzeug, insbesondere Kraftfahrzeug, angegeben. Das Fahrzeug umfasst zumindest einen Teil des Systems zur Absicherung eines Fahrassistenzsystems gemäß den Ausführungsformen der vorliegenden Offenbarung.

In einigen Ausführungsformen kann das System vollständig im Fahrzeug implementiert sein. Insbesondere können alle wesentlichen Elemente des Systems, nämlich die Sensoranordnung und das wenigstens eine Auswertemodul im oder am Fahrzeug bereitgestellt sein. Damit kann die Beurteilung der Performance des Fahrassistenzsystems bereits im Fahrzeug erfolgen.

Alternativ kann nur die Sensoranordnung im oder am Fahrzeug bereitgestellt sein, und das wenigstens eine Auswertemodul kann außerhalb des Fahrzeugs bereitgestellt sein. Beispielsweis kann das wenigstens eine Auswertemodul in einem Server oder einem Backend implementiert sein. Damit kann die Beurteilung der Performance des Fahrassistenzsystems außerhalb des Fahrzeugs erfolgen.

Der Begriff Fahrzeug umfasst PKW, LKW, Busse, Wohnmobile, Krafträder, etc., die der Beförderung von Personen, Gütern, etc. dienen. Insbesondere umfasst der Begriff Kraftfahrzeuge zur Personenbeförderung.

Vorzugsweise ist das Fahrzeug ein dediziertes Testfahrzeug. Beispielsweise kann das System nicht-permanent im Fahrzeug installiert sein. Anders gesagt ist das System nicht fest im Fahrzeug integriert und kann lediglich zeitweise bzw. zeitlich begrenzt zum Zwecke der Absicherung bzw. Homologation des Fahrassistenzsystems im Fahrzeug installiert werden.

Gemäß einem weiteren unabhängigen Aspekt der vorliegenden Offenbarung ist ein Verfahren zur Absicherung eines Fahrassistenzsystems angegeben. Das Verfahren umfasst ein Erfassen einer Betätigung eines Bedienelements eines Fahrzeugs durch einen Nutzer und Erzeugen entsprechender erster Erfassungsdaten, wobei das Erfassen durch eine Sensoranordnung, die im Fahrzeug befestigbar ist, erfolgt; ein Erfassen eines akustischen Signals, das die Betätigung des Bedienelements durch den Nutzer anzeigt oder basierend auf der Betätigung des Bedienelements ausgegeben wird, und Erzeugen entsprechender zweiter Erfassungsdaten, wobei das Erfassen durch die Sensoranordnung erfolgt; ein Bestimmen eines ersten Zeitpunkts, der der Betätigung des Bedienelements durch den Nutzer entspricht, basierend auf den ersten Erfassungsdaten; und ein Bestimmen eines zweiten Zeitpunkts, der einer Ausgabe des akustischen Signals entspricht, basierend auf den zweiten Erfassungsdaten.

Das Bestimmen des ersten Zeitpunkts und das Bestimmen des zweiten Zeitpunkts können in dieser Reihenfolge durchgeführt werden. Alternativ kann im Rahmen der Auswertung der Erfassungsdaten zuerst der zweite Zeitpunkt und dann der erste Zeitpunkt bestimmt werden. Beispielsweise kann das akustische Signal als Trigger verwendet werden, der die Auswertung der Erfassungsdaten initiiert.

Das Verfahren kann die Aspekte des in diesem Dokument beschriebenen Systems zur Absicherung eines Fahrassistenzsystems implementieren.

Gemäß einem weiteren unabhängigen Aspekt der vorliegenden Offenbarung ist ein Software (SW) Programm angegeben. Das SW Programm kann eingerichtet werden, um auf einem oder mehreren Prozessoren ausgeführt zu werden, und um dadurch das in diesem Dokument beschriebene Verfahren zur Absicherung eines Fahrassistenzsystems auszuführen.

Gemäß einem weiteren unabhängigen Aspekt der vorliegenden Offenbarung ist ein Speichermedium angegeben. Das Speichermedium kann ein SW Programm umfassen, welches eingerichtet ist, um auf einem oder mehreren Prozessoren ausgeführt zu werden, und um dadurch das in diesem Dokument beschriebene Verfahren zur Absicherung eines Fahrassistenzsystems auszuführen.

Gemäß einem weiteren unabhängigen Aspekt der vorliegenden Offenbarung ist eine Software mit Programmcode zur Durchführung des Verfahrens zur Absicherung eines Fahrassistenzsystems auszuführen, wenn die Software auf einer oder mehreren softwaregesteuerten Einrichtungen abläuft.

### Kurze Beschreibung der Zeichnungen

Ausführungsbeispiele der Offenbarung sind in den Figuren dargestellt und werden im Folgenden näher beschrieben. Es zeigen:
Figur 1 schematisch ein System zur Absicherung eines Fahrassistenzsystems gemäß Ausführungsformen der vorliegenden Offenbarung,
Figur 2 schematisch ein System zur Absicherung eines Fahrassistenzsystems gemäß weiteren Ausführungsformen der vorliegenden Offenbarung,
Figur 3 schematisch ein System zur Absicherung eines Fahrassistenzsystems gemäß weiteren Ausführungsformen der vorliegenden Offenbarung, und
Figur 4 ein Flussdiagram eines Verfahrens zur Absicherung eines Fahrassistenzsystems gemäß Ausführungsformen der vorliegenden Offenbarung.

### Ausführungsformen der Offenbarung

Im Folgenden werden, sofern nicht anders vermerkt, für gleiche und gleichwirkende Elemente gleiche Bezugszeichen verwendet.

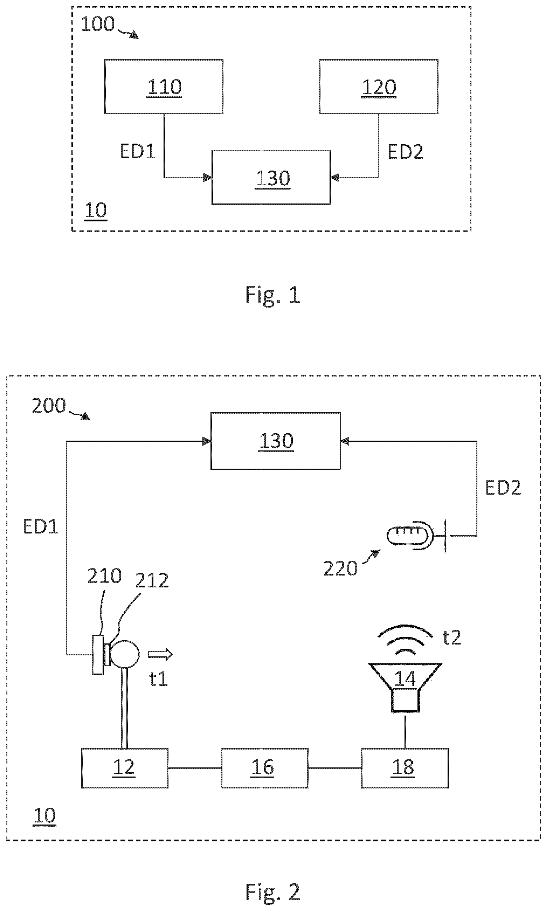

Figur 1 zeigt schematisch ein System 100 zur Absicherung eines Fahrassistenzsystems gemäß Ausführungsformen der vorliegenden Offenbarung.

Das System 100 umfasst eine Sensoranordnung 110, 120 und wenigstens ein Auswertemodul 130. Die Sensoranordnung 110, 120 ist eingerichtet, um eine Betätigung eines Bedienelements eines Fahrzeugs durch einen Nutzer zu erfassen und entsprechende erste Erfassungsdaten ED1 zu erzeugen. Die Sensoranordnung 110, 120 ist weiter eingerichtet, um ein akustisches Signal zu erfassen, das die Betätigung des Bedienelements durch den Nutzer anzeigt (z.B. um einen Fahrer über eine Aktivierung des Fahrassistenzsystems zu informieren) oder basierend auf der Betätigung des Bedienelements ausgegeben wird (z.B. als Warnton, der einen Abstand zu einem Hindernis anzeigt), und entsprechende zweite Erfassungsdaten ED2 zu erzeugen.

In einigen Ausführungsformen kann die Sensoranordnung wenigstens ein erstes Sensormodul 110 umfassen, das eingerichtet ist, um die Betätigung des Bedienelements durch den Nutzer zu erfassen und die ersten Erfassungsdaten ED1 zu erzeugen, und kann weiter wenigstens ein zweites Sensormodul 120 umfassen, das eingerichtet ist, um das akustisches Signal zu erfassen und die zweiten Erfassungsdaten ED2 zu erzeugen.

Das wenigstens eine erste Sensormodul 110 kann zum Beispiel einen oder mehrere elektronische Berührungssensoren umfassen, die bei einer Berührung durch den Nutzer ein entsprechendes Signal ausgeben. Ergänzend oder alternativ kann das wenigstens eine zweite Sensormodul 120 eines oder mehrere Mikrofone umfassen, die ein charakteristisches akustisches Signal erfassen können, das bei und/oder nach einer Aktivierung des Fahrassistenzsystems ausgegeben wird.

Das wenigstens eine Auswertemodul 130 ist eingerichtet, um basierend auf den ersten Erfassungsdaten ED1 einen ersten Zeitpunkt, der der Betätigung des Bedienelements durch den Nutzer entspricht, zu bestimmen; und basierend auf den zweiten Erfassungsdaten ED2 einen zweiten Zeitpunkt, der einer Ausgabe des akustischen Signals entspricht, zu bestimmen.

Damit erfasst das erfindungsgemäße System 100 zum einen das Betätigen des Bedienelements und zum anderen ein dadurch ausgelöstes akustisches Signal. Für jedes dieser Ereignisse wird ein Zeitstempel bzw. ein Zeitpunkt bestimmt, so dass zum Beispiel revisionssicher bestimmt werden kann, ob gesetzlich festgelegte Maximalzeiten zwischen dem Betätigen des Bedienelements und dem akustischen Signal eingehalten werden. Zudem ist es nicht notwendig, eine diskrete Verkabelung bzw. Bussignale abzugreifen und/oder geschützte Informationen, wie z.B. Schaltpläne und/oder Bordnetztopologien, zu verwenden.

In einigen Ausführungsformen kann das System 100 vollständig im Fahrzeug 10 implementiert sein. Insbesondere können alle wesentlichen Elemente des Systems 110, nämlich die Sensoranordnung 110, 120 und das wenigstens eine Auswertemodul 130, im oder am Fahrzeug 10 bereitgestellt sein. Damit kann die Beurteilung der Performance des Fahrassistenzsystems bereits im Fahrzeug 10 erfolgen.

Alternativ kann nur die Sensoranordnung 110, 120 im oder am Fahrzeug 10 bereitgestellt sein, und das wenigstens eine Auswertemodul 130 kann außerhalb des Fahrzeugs 10 bereitgestellt sein. Beispielsweis kann das wenigstens eine Auswertemodul 130 in einem Server oder einem Backend implementiert sein. Damit kann die Beurteilung der Performance des Fahrassistenzsystems außerhalb des Fahrzeugs 10 erfolgen.

Typischerweise ist das Fahrzeug 10 ein dediziertes Testfahrzeug. Beispielsweise kann das System 100 nicht-permanent im Fahrzeug 10 installiert sein. Anders gesagt ist das System 100 nicht fest im Fahrzeug 10 integriert und kann lediglich zeitweise bzw. zeitlich begrenzt zum Zwecke der Absicherung bzw. Homologation des Fahrassistenzsystems im Fahrzeug 10 installiert werden.

Figur 2 zeigt schematisch ein System 200 zur Absicherung eines Fahrassistenzsystems gemäß Ausführungsformen der vorliegenden Offenbarung.

Das System 200 umfasst das wenigstens eine erste Sensormodul 210, das die ersten Erfassungsdaten ED1 erzeugt, und das wenigstens eine zweite Sensormodul 220, das die zweiten Erfassungsdaten ED2 erzeugt. Das wenigstens eine erste Sensormodul 210 und das wenigstens eine zweite Sensormodul 220 können von einem verschiedenen Funktionstyp sein. Beispielsweise kann das wenigstens eine erste Sensormodul 210 eines oder mehrere berührungssensitive Sensorelemente, wie einen oder mehrere elektronische Berührungs- und/oder Drucksensoren, umfassen. Das wenigstens eine zweite Sensormodul 220 kann eines oder mehrere Mikrofone umfassen.

Das berührungssensitive Sensorelement kann einen Tastsensor und/oder ein Piezoelement umfassen, das auf Berührung und Druck reagiert. Alternativ kann das berührungssensitive Sensorelement eine berührungssensitive elektrische Kontaktfläche umfassen oder sein.

In einigen Ausführungsformen kann das wenigstens eine erste Sensormodul 210 die ersten Erfassungsdaten ED1 nur dann erzeugen und an die wenigstens eine Auswerteeinheit 130 ausgeben, wenn die Berührung eine Schwelle, wie zum Beispiel eine Kraft- und/oder Druckschwelle, überschreitet. Damit kann verhindert werden, dass eine Betätigung des Bedienelements 12 fälschlicherweise zum Beispiel aufgrund einer leichten Berührung des Nutzers ohne entsprechende Aktivierung des Fahrassistenzsystems erfasst wird.

Das wenigstens eine erste Sensormodul 210 kann am Bedienelement 12 des Fahrzeugs 10 befestigbar, insbesondere lösbar befestigbar sein. Beispielsweise kann das wenigstens eine erste Sensormodul 210 mittels eines oder mehrerer erster Montageelemente 212 lösbar am Bedienelement 12 befestigt werden. Das eine oder die mehreren ersten Montageelemente 212 können zum Beispiel Klebefolien oder mechanische Clips sein.

Im Beispiel der Figur 2 ist das Bedienelement 12 des Fahrzeugs 10 ein Gangwahlschalter. Beim Einlegen eines Rückwärtsganges zum Zeitpunkt t1 kann eine Einparkhilfe aktiviert und ein entsprechendes akustisches Signal zum Zeitpunkt t2 über einen Lautsprecher 14 des Fahrzeugs 10 ausgegeben werden. Die Einparkhilfe kann durch ein entsprechendes Steuergerät 16 implementiert werden. Optional kann zudem ein Verstärker 18 vorgesehen sein, der zwischen das Steuergerät 16 und den Lautsprecher 14 geschaltet ist, um ein hörbares akustisches Signal auszugeben.

Der Zeitpunkt t1 und der Zeitpunkt t2 können ausgewertet werden, wobei insbesondere eine Zeitdifferenz zwischen dem Einlegen des Rückwärtsganges und der Ausgabe des akustischen Signals bestimmt werden kann. Beispielsweise kann gesetzlich festgelegt sein, dass die Zeitspanne zwischen der Betätigung des Bedienelements 12 zum Zeitpunkt t1 und der dadurch initiierten Ausgabe des akustischen Signals zum Zeitpunkt t2 gleich oder kleiner als ein Schwellwert sein muss. Der Schwellwert kann zum Beispiel 1 Sekunde oder weniger, 800 Millisekunden oder weniger, oder 600 Millisekunden oder weniger sein. In einigen Ausführungsformen kann der Schwellwert 600 Millisekunden sein.

In einigen Ausführungsformen können das wenigstens eine erste Sensormodul 210 und das wenigstens eine zweite Sensormodul 220 mit jeweils einem Kanal eines kalibrierten Speicheroszilloskops verbunden sein, das die Auswerteeinheit bildet. Beispielsweise kann an einen Mikrofonverstärker ein Richtmikrofon angeschlossen werden, welches mit einer flexiblen Klemmhalterung im Fahrzeuginnenraum auf den Lautsprecher 14 ausgerichtet wird. Hierbei kann optional auch ein Kunstkopf zur akustischen Messung zum Einsatz kommen. Bei Betätigung des Gangwahlschalters 12 kann das berührungssensitive Sensorelement stimuliert und ein elektrisches Signal an das Oszilloskop ausgegeben werden. Gleichermaßen kann durch das Richtmikrofon das akustische Signal aufgenommen, durch einen Signalverstärker verstärkt und an das Oszilloskop weitergeleitet werden. Im Ergebnis kann mittels entsprechender Zeitstempel eine exakte zeitliche Messung zwischen Aktion und Reaktion bestimmt und dokumentiert werden.

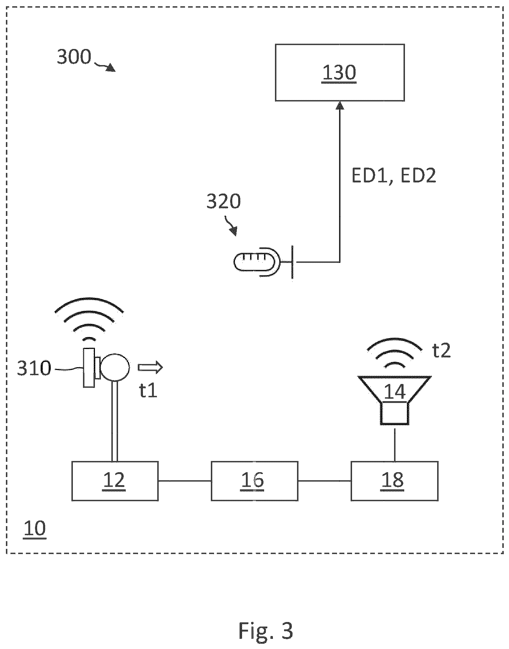

Figur 3 zeigt schematisch ein System 300 zur Absicherung eines Fahrassistenzsystems gemäß weiteren Ausführungsformen der vorliegenden Offenbarung.

Das System 300 umfasst ein Sensormodul 320, das eingerichtet ist, um sowohl die Betätigung des Bedienelements 12 durch den Nutzer zum Zeitpunkt t1 als auch das akustisches Signal zum Zeitpunkt t2 zu erfassen und die ersten Erfassungsdaten ED1 und die zweiten Erfassungsdaten ED2 zu erzeugen. Beispielsweise kann ein einziges Sensormodul 320 vorgesehen sein, um beide Ereignisse zu erfassen. In einigen Ausführungsformen kann das Sensormodul 320 ein Mikrofon umfassen oder ein Mikrofon sein.

Im Beispiel der Figur 3 umfasst das System 300 anstelle des wenigstens einen ersten Sensormoduls einen Sound-Generator 310 am Bedienelement 12. Der Sound-Generator 310 ist eingerichtet, um bei der Betätigung des Bedienelements 12 durch den Nutzer Schall zu erzeugen, der durch das Sensormodul 320 erfassbar ist, um die ersten Erfassungsdaten ED1 zu erzeugen. In einigen Ausführungsformen kann der Sound-Generator 310 ein mechanischer Sound-Generator, wie zum Beispiel ein mechanischer Klick-Sound-Generator.

Der Sound-Generator 310 kann am Bedienelement 12 des Fahrzeugs 10 befestigbar, insbesondere lösbar befestigbar sein. Beispielsweise kann der Sound-Generator 310 mittels eines oder mehrerer Montageelemente lösbar am Bedienelement 12 befestigt werden. Das eine oder die mehreren Montageelemente können zum Beispiel Klebefolien oder mechanische Clips sein.

Durch die Verwendung des Sound-Generators 310 kann eine Verkabelung und Spannungsversorgung gespart werden. Mittels der erfassten Signale kann trotzdem eine exakte zeitliche Messung zwischen Aktion und Reaktion bestimmt und dokumentiert werden.

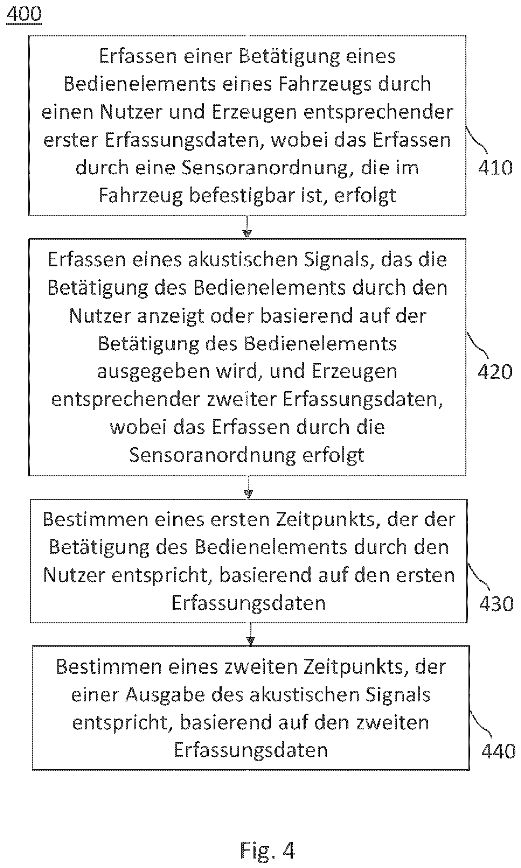

Figur 4 zeigt ein Flussdiagram eines Verfahrens 400 zur Absicherung eines Fahrassistenzsystems gemäß Ausführungsformen der vorliegenden Offenbarung. Das Verfahren 400 kann durch eine entsprechende Software implementiert werden, die durch einen oder mehrere Prozessoren (z.B. eine CPU) ausführbar ist.

Das Verfahren 400 umfasst im Block 410 ein Erfassen einer Betätigung eines Bedienelements eines Fahrzeugs durch einen Nutzer und Erzeugen entsprechender erster Erfassungsdaten, wobei das Erfassen durch eine Sensoranordnung, die im Fahrzeug befestigbar ist, erfolgt; im Block 420 ein Erfassen eines akustischen Signals, das die Betätigung des Bedienelements durch den Nutzer anzeigt oder basierend auf der Betätigung des Bedienelements ausgegeben wird, und Erzeugen entsprechender zweiter Erfassungsdaten, wobei das Erfassen durch die Sensoranordnung erfolgt; im Block 430 ein Bestimmen eines ersten Zeitpunkts, der der Betätigung des Bedienelements durch den Nutzer entspricht, basierend auf den ersten Erfassungsdaten; und im Block 440 ein Bestimmen eines zweiten Zeitpunkts, der einer Ausgabe des akustischen Signals entspricht, basierend auf den zweiten Erfassungsdaten.

Das Bestimmen des ersten Zeitpunkts im Block 430 und das Bestimmen des zweiten Zeitpunkts im Block 440 können in dieser Reihenfolge durchgeführt werden. Alternativ kann im Rahmen der Auswertung der Erfassungsdaten zuerst der zweite Zeitpunkt gemäß dem Block 440 und dann der erste Zeitpunkt gemäß dem Block 430 bestimmt werden. Beispielsweise kann das akustische Signal als Trigger verwendet werden, der die Auswertung der Erfassungsdaten initiiert.

Erfindungsgemäß erfasst die Sensoranordnung, die im Fahrzeug installierbar ist, zwei Ereignisse: Zum einen das Betätigen des Bedienelements (z.B. ein haptischer und/oder akustischer Trigger am Gangwahlschalter oder einem Aktivierungselement für das Fahrassistenzsystem) und zum anderen ein dadurch ausgelöstes akustisches Signal (z.B. eine Tonausgabe eines Lautsprechers), wobei für jedes der Ereignisse ein Zeitstempel bestimmt wird. Mittels der entsprechenden Zeitstempel kann bestimmt werden, ob z.B. gesetzlich festgelegte Maximalzeiten zwischen Betätigen des Bedienelements und dem akustischen Signal eingehalten werden. Dadurch sind Rückschlüsse auf eine Performance des Fahrassistenzsystems, wie einer Einparkhilfe, beispielsweise für eine Homologation desselben möglich. Zudem ist es nicht notwendig, für die Homologation eine diskrete Verkabelung bzw. Bussignale abzugreifen und/oder geschützte Informationen, wie z.B. Schaltpläne und/oder Bordnetztopologien, zu verwenden.

Obwohl die Erfindung im Detail durch bevorzugte Ausführungsbeispiele näher illustriert und erläutert wurde, so ist die Erfindung nicht durch die offenbarten Beispiele eingeschränkt und andere Variationen können vom Fachmann hieraus abgeleitet werden, ohne den Schutzumfang der Erfindung zu verlassen. Es ist daher klar, dass eine Vielzahl von Variationsmöglichkeiten existiert. Es ist ebenfalls klar, dass beispielhaft genannte Ausführungsformen wirklich nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen beispielsweise hinsichtlich der Funktion oder der Anordnung einzelner, in einer beispielhaften Ausführungsform genannter Elemente vornehmen kann, ohne den Schutzbereich zu verlassen, der durch die Ansprüche und deren rechtliche Entsprechungen, wie etwa weitergehenden Erläuterungen in der Beschreibung, definiert wird.

## Patentansprüche

1. System (100, 200, 300) zur Absicherung eines Fahrassistenzsystems, umfassend:
- eine Sensoranordnung (110, 120; 210, 220; 320), die eingerichtet ist, um:
- eine Betätigung eines Bedienelements (12) eines Fahrzeugs (10) durch einen Nutzer zu erfassen und entsprechende erste Erfassungsdaten (ED1) zu erzeugen, und
- ein akustisches Signal, das die Betätigung des Bedienelements (12) durch den Nutzer anzeigt oder basierend auf der Betätigung des Bedienelements (12) ausgegeben wird, zu erfassen und entsprechende zweite Erfassungsdaten (ED2) zu erzeugen; und
- wenigstens ein Auswertemodul (130), das eingerichtet ist, um:
- basierend auf den ersten Erfassungsdaten (ED1) einen ersten Zeitpunkt (t1), der der Betätigung des Bedienelements (12) durch den Nutzer entspricht, zu bestimmen, und
- basierend auf den zweiten Erfassungsdaten (ED2) einen zweiten Zeitpunkt (t2), der einer Ausgabe des akustischen Signals entspricht, zu bestimmen.

2. Das System (100, 200, 300) nach Anspruch 1, wobei das wenigstens eine Auswertemodul (130) eingerichtet ist, um eine Differenz zwischen dem zweiten Zeitpunkt (t2) und dem ersten Zeitpunkt (t1) zu bestimmen.

3. Das System (100, 200) nach Anspruch 1 oder 2, wobei die Sensoranordnung (110, 120; 210, 220) umfasst:
- wenigstens ein erstes Sensormodul (110, 210), das eingerichtet ist, um die Betätigung des Bedienelements (12) durch den Nutzer zu erfassen und die ersten Erfassungsdaten (ED1) zu erzeugen;
- wenigstens ein zweites Sensormodul (120, 220), das eingerichtet ist, um das akustisches Signal, das die Betätigung des Bedienelements (12) durch den Nutzer anzeigt, zu erfassen und die zweiten Erfassungsdaten (ED2) zu erzeugen.

4. Das System (100, 200) nach Anspruch 3, wobei:
- das wenigstens eine erste Sensormodul (110, 210) und das wenigstens eine zweite Sensormodul (120, 220) von einem verschiedenen Funktionstyp sind; und/oder
- das wenigstens eine erste Sensormodul (110, 210) einen oder mehrere elektronische Berührungssensoren umfasst; und/oder
- das wenigstens eine zweite Sensormodul (120, 220) eines oder mehrere Mikrofone umfasst.

5. Das System (100, 200) nach Anspruch 3 oder 4, wobei das wenigstens eine erste Sensormodul (110, 210) am Bedienelement (12) des Fahrzeugs (10) befestigbar ist, insbesondere wobei das wenigstens eine erste Sensormodul (110, 210) lösbar am Bedienelement (12) des Fahrzeugs (10) befestigbar ist.

6. Das System (300) nach Anspruch 1 oder 2, wobei die Sensoranordnung umfasst:
- ein Sensormodul (320), das eingerichtet ist, um sowohl die Betätigung des Bedienelements (12) durch den Nutzer als auch das akustisches Signal zu erfassen und die ersten Erfassungsdaten (ED1) und die zweiten Erfassungsdaten (ED2) zu erzeugen, insbesondere wobei das Sensormodul (320) ein Mikrofon ist.

7. Das System (300) nach Anspruch 6, weiter umfassend einen Sound-Generator (310), der am Bedienelement (12) des Fahrzeugs (10) befestigbar ist, wobei der Sound-Generator (310) eingerichtet ist, um bei der Betätigung des Bedienelements (12) durch den Nutzer Schall zu erzeugen, der durch das Sensormodul (320) erfassbar ist, um die ersten Erfassungsdaten (ED1) zu erzeugen, insbesondere wobei der Sound-Generator (310) ein mechanischer Sound-Generator ist.

8. Das System (100, 200, 300) nach einem der Ansprüche 1 bis 7, wobei das Bedienelement (12) des Fahrzeugs (10) ein Gangwahlschalter oder ein Schaltelement zum Aktivieren des Fahrassistenzsystems ist.

9. Verfahren (400) zur Absicherung eines Fahrassistenzsystems, umfassend:
- Erfassen (410) einer Betätigung eines Bedienelements eines Fahrzeugs durch einen Nutzer und Erzeugen entsprechender erster Erfassungsdaten, wobei das Erfassen durch eine Sensoranordnung, die im Fahrzeug befestigbar ist, erfolgt;
- Erfassen (420) eines akustischen Signals, das die Betätigung des Bedienelements durch den Nutzer anzeigt oder basierend auf der Betätigung des Bedienelements ausgegeben wird, und Erzeugen entsprechender zweiter Erfassungsdaten, wobei das Erfassen durch die Sensoranordnung erfolgt;
- Bestimmen (430) eines ersten Zeitpunkts, der der Betätigung des Bedienelements durch den Nutzer entspricht, basierend auf den ersten Erfassungsdaten; und
- Bestimmen (440) eines zweiten Zeitpunkts, der einer Ausgabe des akustischen Signals entspricht, basierend auf den zweiten Erfassungsdaten.

10. Speichermedium, umfassend ein Software-Programm, das eingerichtet ist, um auf einem oder mehreren Prozessoren ausgeführt zu werden, und um dadurch das Verfahren (400) gemäß Anspruch 9 auszuführen.

## Claims

1. System (100, 200, 300) for securing a driver assistance system, comprising:
- a sensor arrangement (110, 120; 210, 220; 320) configured to:
- detect an actuation of an operating element (12) of a vehicle (10) by a user and generate corresponding first detection data (ED1), and
- detect an acoustic signal that indicates the actuation of the operating element (12) by the user or is output based on the actuation of the operating element (12), and generate corresponding second detection data (ED2); and
- at least one evaluation module (130) configured to:
- determine, based on the first detection data (ED1), a first point in time (t1) corresponding to the actuation of the operating element (12) by the user, and
- determine, based on the second detection data (ED2), a second point in time (t2) corresponding to an output of the acoustic signal.

2. The system (100, 200, 300) according to claim 1, wherein the at least one evaluation module (130) is configured to determine a difference between the second point in time (t2) and the first point in time (t1).

3. The system (100, 200) according to claim 1 or 2, wherein the sensor arrangement (110, 120; 210, 220) comprises:
- at least one first sensor module (110, 210) configured to detect the actuation of the operating element (12) by the user and generate the first detection data (ED1);
- at least one second sensor module (120, 220) configured to detect the acoustic signal that indicates the actuation of the operating element (12) by the user and generate the second detection data (ED2).

4. The system (100, 200) according to claim 3, wherein:
- the at least one first sensor module (110, 210) and the at least one second sensor module (120, 220) are of a different functional type; and/or
- the at least one first sensor module (110, 210) comprises one or more electronic touch sensors; and/or
- the at least one second sensor module (120, 220) comprises one or more microphones.

5. The system (100, 200) according to claim 3 or 4, wherein the at least one first sensor module (110, 210) is attachable to the operating element (12) of the vehicle (10), in particular wherein the at least one first sensor module (110, 210) is detachably attachable to the operating element (12) of the vehicle (10).

6. The system (300) according to claim 1 or 2, wherein the sensor arrangement comprises:
- a sensor module (320) configured to detect both the actuation of the operating element (12) by the user and the acoustic signal and generate the first detection data (ED1) and the second detection data (ED2), in particular wherein the sensor module (320) is a microphone.

7. The system (300) according to claim 6, further comprising a sound generator (310) attachable to the operating element (12) of the vehicle (10), wherein the sound generator (310) is configured to generate sound upon actuation of the operating element (12) by the user, which can be detected by the sensor module (320) to generate the first detection data (ED1), in particular wherein the sound generator (310) is a mechanical sound generator.

8. The system (100, 200, 300) according to any one of claims 1 to 7, wherein the operating element (12) of the vehicle (10) is a gear selector switch or a switch element for activating the driver assistance system.

9. Method (400) for securing a driver assistance system, comprising:
- detecting (410) an actuation of an operating element of a vehicle by a user and generating corresponding first detection data, wherein the detection is performed by a sensor arrangement that can be attached in the vehicle;
- detecting (420) an acoustic signal that indicates the actuation of the operating element by the user or is output based on the actuation of the operating element, and generating corresponding second detection data, wherein the detection is performed by the sensor arrangement;
- determining (430) a first point in time corresponding to the actuation of the operating element by the user, based on the first detection data; and
- determining (440) a second point in time corresponding to an output of the acoustic signal, based on the second detection data.

10. Storage medium comprising a software program configured to be executed on one or more processors, and thereby to execute the method (400) according to claim 9.

## Revendications

1. Système (100, 200, 300) pour sécuriser un système d'assistance à la conduite, comprenant :
- un agencement de capteurs (110, 120 ; 210, 220 ; 320) configuré pour :
- détecter un actionnement d'un élément de commande (12) d'un véhicule (10) par un utilisateur et générer des premières données de détection (ED1) correspondantes, et
- détecter un signal acoustique qui indique l'actionnement de l'élément de commande (12) par l'utilisateur ou qui est émis sur la base de l'actionnement de l'élément de commande (12), et générer des secondes données de détection (ED2) correspondantes ; et
- au moins un module d'évaluation (130) configuré pour :
- déterminer, sur la base des premières données de détection (ED1), un premier instant (t1) correspondant à l'actionnement de l'élément de commande (12) par l'utilisateur, et
- déterminer, sur la base des secondes données de détection (ED2), un second instant (t2) correspondant à une émission du signal acoustique.

2. Système (100, 200, 300) selon la revendication 1, dans lequel l'au moins un module d'évaluation (130) est configuré pour déterminer une différence entre le second instant (t2) et le premier instant (t1).

3. Système (100, 200) selon la revendication 1 ou 2, dans lequel l'agencement de capteurs (110, 120 ; 210, 220) comprend :
- au moins un premier module de capteur (110, 210) configuré pour détecter l'actionnement de l'élément de commande (12) par l'utilisateur et générer les premières données de détection (ED1) ;
- au moins un second module de capteur (120, 220) configuré pour détecter le signal acoustique qui indique l'actionnement de l'élément de commande (12) par l'utilisateur et générer les secondes données de détection (ED2).

4. Système (100, 200) selon la revendication 3, dans lequel :
- l'au moins un premier module de capteur (110, 210) et l'au moins un second module de capteur (120, 220) sont d'un type fonctionnel différent ; et/ou
- l'au moins un premier module de capteur (110, 210) comprend un ou plusieurs capteurs tactiles électroniques ; et/ou
- l'au moins un second module de capteur (120, 220) comprend un ou plusieurs microphones.

5. Système (100, 200) selon la revendication 3 ou 4, dans lequel l'au moins un premier module de capteur (110, 210) peut être fixé à l'élément de commande (12) du véhicule (10), en particulier dans lequel l'au moins un premier module de capteur (110, 210) peut être fixé de manière amovible à l'élément de commande (12) du véhicule (10).

6. Système (300) selon la revendication 1 ou 2, dans lequel l'agencement de capteurs comprend :
- un module de capteur (320) configuré pour détecter à la fois l'actionnement de l'élément de commande (12) par l'utilisateur et le signal acoustique et générer les premières données de détection (ED1) et les secondes données de détection (ED2), en particulier dans lequel le module de capteur (320) est un microphone.

7. Système (300) selon la revendication 6, comprenant en outre un générateur de son (310) pouvant être fixé à l'élément de commande (12) du véhicule (10), dans lequel le générateur de son (310) est configuré pour générer un son lors de l'actionnement de l'élément de commande (12) par l'utilisateur, qui peut être détecté par le module de capteur (320) pour générer les premières données de détection (ED1), en particulier dans lequel le générateur de son (310) est un générateur de son mécanique.

8. Système (100, 200, 300) selon l'une quelconque des revendications 1 à 7, dans lequel l'élément de commande (12) du véhicule (10) est un sélecteur de vitesse ou un élément de commutation pour activer le système d'assistance à la conduite.

9. Procédé (400) pour sécuriser un système d'assistance à la conduite, comprenant :
- la détection (410) d'un actionnement d'un élément de commande d'un véhicule par un utilisateur et la génération de premières données de détection correspondantes, la détection étant effectuée par un agencement de capteurs pouvant être fixé dans le véhicule ;
- la détection (420) d'un signal acoustique qui indique l'actionnement de l'élément de commande par l'utilisateur ou qui est émis sur la base de l'actionnement de l'élément de commande, et la génération de secondes données de détection correspondantes, la détection étant effectuée par l'agencement de capteurs ;
- la détermination (430) d'un premier instant correspondant à l'actionnement de l'élément de commande par l'utilisateur, sur la base des premières données de détection ; et
- la détermination (440) d'un second instant correspondant à une émission du signal acoustique, sur la base des secondes données de détection.

10. Support de stockage comprenant un programme logiciel configuré pour être exécuté sur un ou plusieurs processeurs, et ainsi exécuter le procédé (400) selon la revendication 9.
